Europäisches Patentamt

European Patent Office

Office européen des brevets

(19)

(11) Veröffentlichungsnummer: **0 445 425 B1**

(12) **EUROPÄISCHE PATENTSCHRIFT**

(45) Veröffentlichungstag der Patentschrift: **17.08.94**

(51) Int. Cl.5: **H04N 5/72**, H04N 5/74

(21) Anmeldenummer: **90125372.4**

(22) Anmeldetag: **22.12.90**

(54) **Lichtventilprojektor zur alternativen Wiedergabe von Fernsehsignalen unterschiedlicher Bildseitenverhältnisse.**

(30) Priorität: **03.03.90 DE 4006788**

(43) Veröffentlichungstag der Anmeldung:
**11.09.91 Patentblatt 91/37**

(45) Bekanntmachung des Hinweises auf die Patenterteilung:
**17.08.94 Patentblatt 94/33**

(84) Benannte Vertragsstaaten:
**AT CH DE FR GB IT LI**

(56) Entgegenhaltungen:
**GB-A- 2 079 090**
**US-A- 4 681 405**

**PATENT ABSTRACTS OF JAPAN vol. 13, no. 317 (E-789)(3665) 19 Juli 1989,& JP-A-01 086682 (SONY) 31 März 1989**

**PATENT ABSTRACTS OF JAPAN vol. 10, no. 358 (P-522) 02 Dezember 1986,& JP-A-61 156038 (MINOLTA CAMERA) 15 Juli 1986,**

**IEEE TRANSACTIONS ON BROADCASTING. vol. bc-28, no. 2, Juni 1982, NEW YORK US Seiten 51 - 64; KUBO: "Development of high-definition tv displays"**

(73) Patentinhaber: **GRUNDIG E.M.V. Elektro-Mechanische Versuchsanstalt Max Grundig holländ. Stiftung & Co. KG.**
**Kurgartenstrasse 37**
**D-90762 Fürth (DE)**

(72) Erfinder: **Köchel, Matthias, Grundig E.M.V., Max Grundig**
**holländ. Stiftung & Co. KG,**
**Kurgartenstrasse 37**
**W-8510 Fürth (DE)**

Rank Xerox (UK) Business Services
(3.10/3.09/3.3.3)

**Beschreibung**

Die Erfindung betrifft einen Lichtventilprojektor zur Wiedergabe von Fernsehsignalen mit den im Oberbegriff des Anspruchs 1 angegebenen Merkmalen.

Lichtventilprojektoren sind beispielsweise aus den europäischen Patentanmeldungen EP-A2-0 193 401, EP-A1-0 331 326, EP-A2-0 317 261, der Zeitschrift "NTZ", Bd. 41 (1988), Heft 6, S. 351, und der nicht vorveröffentlichten europäischen Patentanmeldung EP-A-0 370 471 bekannt.

Mittels der bekannten Lichtventilprojektoren wird ein Fernsehsignal mit einem bestimmten Bildbreiten- zu Bildhöhenverhältnis mittels einer Projektionsoptik auf einen Projektionsschirm projiziert. Das (Die) zwischen der Beleuchtungsoptik und der Projektionsoptik angeordnete(n) Lichtventil(e), welche(s) dasselbe Bildbreiten- zu Bildhöhenverhältnis aufweist(en) wie das auf der Projektionsfläche projizierte Bild, wird mit das Bild beschreibenden elektrischen Signalen angesteuert, welche beispielsweise die Transmissionseigenschaften jedes Bildpunktes des (der) Lichtventils(e) in gewünschter Weise beeinflussen.

Die heute insbesondere von terrestrischen Sendern ausgestrahlten Fernsehbilder haben ein Bildbreiten- zu Bildhöhenverhältnis von 4:3. Daneben werden seit einiger Zeit Fernsehsysteme vorgeschlagen, bei denen die Fernsehbilder mit einem Bildbreiten- zu Bildhöhenverhältnis von 16:9 übertragen werden. Es kann davon ausgegangen werden, daß es in naher Zukunft eine Koexistenz von Bildern des Formats 16:9 und 4:3 geben wird.

Die Aufgabe der Erfindung besteht darin, einen Lichtventilprojektor mit den im Oberbegriff des Anspruchs 1 angegebenen Merkmalen, wie er beispielsweise aus IEEE Transactions on Broadcasting, vd. bc-28, no. 2, June 1982, New York, US, Seiten 51-64, kVBO: "Development of high-definition tv displays" bekannt ist, derart weiterzubilden, daß er zur Wiedergabe von Fernsehsignalen unterschiedlicher Bildbreiten- zu Bildhöhenverhältnisse geeignet ist.

Diese Aufgabe wird bei einem Lichtventilprojektor mit den im Oberbegriff des Anspruchs 1 angegebenen Merkmalen durch die im kennzeichnenden Teil des Anspruchs 1 angegebenen Merkmale gelost. Vorteilhafte Ausgestaltungen des Lichtventilprojektors nach der Erfindung ergeben sich aus den Unteransprüchen.

Die Vorteile des beanspruchten Lichtventilprojektors bestehen insbesondere darin, daß sowohl bei Fernsehsignalen mit einem ersten als auch bei Fernsehsignalen mit einem zweiten Bildbreiten- zu Bildhöhenverhältnis die Fläche des Lichtventils vollständig ausgenutzt wird, so daß die auf dem Projektionsschirm dargestellten Bilder stets ohne Auflösungsverlust wiedergegeben werden.

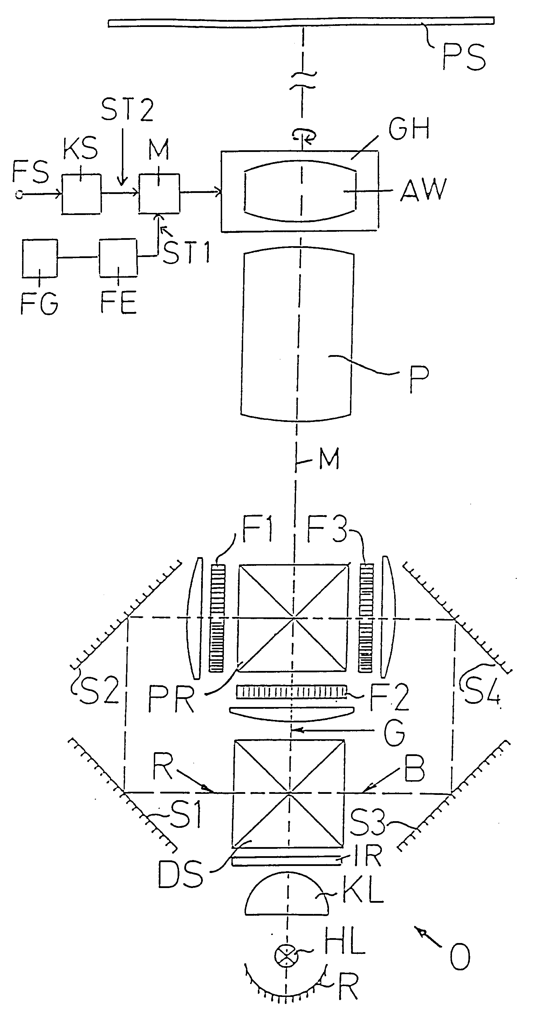

Weitere Vorteile der Erfindung ergeben sich aus der Erläuterung eines Ausführungsbeispiels anhand der Figur.

Die Figur zeigt den grundsätzlichen Aufbau eines Lichtventilprojektors, welcher sowohl zur Wiedergabe von Farbfernsehsignalen mit einem Bildbreiten- zu Bildhöhenverhältnis von 16:9 als auch zur Wiedergabe von Farbfernsehsignalen mit einem Bildbreiten- zu Bildhöhenverhältnis von 4 : 3 verwendet werden kann.

Das Licht einer Halogenlampe HL wird von einem Reflektor R reflektiert, von einer Kondensor-Linse KL gebündelt und über ein Infrarot-Absorptionsfilter IR geleitet, in welchem die Infrarotanteile des Lichtes absorbiert werden. Dann wird das Signal mittels dichroitischer Spiegel DS in die Primärfarben R, G und B zerlegt. Die so erzeugten roten, grünen und blauen Lichtstrahlen werden über entsprechend angeordnete Spiegel S1 bis S4 der Beleuchtungsoptik O umgelenkt und gelangen zu Flüssigkristall-Lichtventilen F1, F2, F3. Diesen Flüssigkristall-Lichtventilen F1, F2, F3 ist ein dichroitisches Prisma PR nachgeordnet, in welchem die von den Flüssigkristall-Lichtventilen F1, F2, F3 modulierten Lichtbündel einander überlagert werden. Das so erzeugte Lichtbündel wird durch eine dem dichroitischen Prisma PR nachgeordnete Projektionsoptik P vergrößert zur Abbildung gebracht. Das mittels der Projektionsoptik P vergrößerte Farbbild wird durch eine um die Mittelachse M des Lichtventilprojektors in eine von zwei möglichen Stellungen drehbaren Anamorphot bzw. einer Aufweitungsoptik AW in einer Richtung gedehnt und auf einem Projektionsschirm PS abgebildet.

Die Flüssigkristall-Lichtventile F1, F2, F3 weisen ein Bildbreiten- zu Bildhöhenverhältnis BS auf, welches dem geometrischen Mittel zwischen den oben genannten Bildbreiten- zu Bildhöhenverhältnissen entspricht:

$$BS = [\,(4:3) \cdot (16:9)\,] \exp 0,5 = 1.5396007$$

Soll mittels des gezeigten Lichtventilprojektors ein Fernsehbild mit einem Bildbreiten- zu Bildhöhenverhältnis von 4:3 dargestellt werden, dann wird der Anamorphot AW in eine erste Stellung gedreht, derart, daß das Fernsehbild in vertikaler Richtung um einen Faktor

$$FK1 = BS : (4:3) = 1.1547$$

gedehnt wird. Dadurch wird aus dem Bild in der Ebene der Flüssigkristall-Lichtventile, welches ein Bildbreitenzu Bildhöhenverhältnis von 1.5396007 aufweist, ein Bild mit dem gewünschten Bildbreiten- zu Bildhöhenverhältnis von 4:3 in der Projektionsebene erzeugt.

Soll mittels des gezeigten Lichtventilprojektors hingegen ein Fernsehbild mit einem Bildbreiten- zu Bildhöhenverhältnis von 16:9 dargestellt werden, dann wird der Anamorphot AW in eine zweite, gegenüber der ersten Stellung um 90° um die Mittelachse M gedrehte Stellung gebracht, derart, daß das Fernsehbild in horizontaler Richtung um einen Faktor

$$FK2 = (16:9) : BS = 1.1547$$

gedehnt wird, welcher mit dem oben genannten Faktor FK1 übereinstimmt. Dadurch wird aus dem Bild in der Ebene der Flüssigkristall-Lichtventile, welches ein Bildbreiten- zu Bildhöhenverhältnis von 1.5396007 aufweist, ein Bild mit dem gewünschten Bildbreiten- zu Bildhöhenverhältnis von 16:9 in der Projektionsebene erzeugt.

Da - wie aus den vorstehenden Ausführungen ersichtlich ist - der zur Erzeugung eines Bildes mit dem gewünschten Bildbreiten- zu Bildhöhenverhältnis jeweils notwendige Dehnungs- bzw. Aufweitungsfaktor FK1 bzw. FK2 identisch ist, kann die notwendige Dehnung bzw. Aufweitung mittels eines drehbaren Anamorphots erfolgen. Die Drehung des Anamorphots AW in die jeweils zur Aufweitung des Bildes notwendige Stellung erfolgt bei einer ersten Ausführungsform der Erfindung manuell. Hierzu ist der Anamorphot AW fest mit einem drehbaren Gehäusering GH verbunden, welcher für den Benutzer des Projektors zugänglich ist.

Bei einer zweiten Ausführungsform der Erfindung erfolgt die Drehung des Anamorphots AW in die jeweils zur Aufweitung des Bildes notwendige Stellung in Ansprache auf einen mittels eines Fernbedienungsgebers FG eingegebenen Bedienbefehl, welcher von einem Fernbedienempfänger FE ausgewertet und in Form eines Steuersignales ST1 einem Motor M zugeführt wird, welcher die genannte Drehung durchführt.

Bei einer dritten Ausführungsform der Erfindung erfolgt die Drehung des Anamorphots AW in die jeweils zur Aufweitung des Bildes notwendige Stellung automatisch nach Auswertung eines zusammen mit dem Fernsehsignal übertragenen Kennsignals für das Bildbreiten- zu Bildhöhenverhältnis. Ein derartiges Kennsignal kann beispielsweise in einer Kennsignalzeile der vertikalen Austastlücke des Fernsehsignals übertragen werden, wie es grundsätzlich aus der Deutschen Patentanmeldung P 39 35 547.0 der Anmelderin bekannt ist. Das das Kennsignal enthaltende Fernsehsignal FS wird einer Schaltung KS zur Kennsignalauswertung zugeführt, deren Ausgangssignal als Steuersignal ST2 dem Motor M zugeführt wird. Dieser führt in Ansprache auf das genannte Steuersignal die Drehung des Anamorphots AW in die gewünschte Stellung durch.

Mittels des vorstehend beschriebenen Lichtventilprojektors können Farbfernsehsignale wiedergegeben werden. Die Erfindung ist aber auch bei Schwarz-Weiß-Projektoren verwendbar, bei denen keine R, G, B-Aufspaltung erfolgt. Ferner kann die Erfindung auch zur Darstellung von Fernsehsignalen verwendet werden, welche andere Bildbreiten- zu Bildhöhenverhältnisse als die oben beschriebenen aufweisen. Ferner ist die Erfindung nicht nur bei Projektionsgeräten verwendbar, deren Lichtventile durch Flüssigkristalle realisiert sind, sondern beispielsweise auch bei Projektionsgeräten, bei deren Lichtventil der Effekt der Modulation des Lichts durch Veränderung der Oberfläche einer viskosen Flüssigkeitsschicht ausgenutzt wird. Weiterhin kann die Erfindung sowohl bei Lichtventilen auf Transmissions- als auch auf Reflexionsbasis verwendet werden.

**Patentansprüche**

1. Lichtventil-Projektor zur Wiedergabe von Fernsehsignalen, bestehend aus
   - einer Beleuchtungsoptik,
   - mindestens einem Lichtventil,
   - einer Projektionsoptik, und
   - einem Anamorphoten

   **dadurch gekennzeichnet**, daß zur alternativen Wiedergabe von Fernsehsignalen zweier unterschiedlicher Bildbreiten- zu Bildhöhenverhältnisse
   - das Bildbreiten- zu Bildhöhenverhältnis jedes Lichtventils (F1, F2, F3) dem geometrischen Mittel aus den beiden unterschiedlichen Bildbreiten- zu Bildhöhenverhältnissen entspricht, und der Anamorphot (AW)
   - in eine von zwei Stellungen um die Mittelachse (M) zur Aufweitung des Bildes in einer vom Bildbreitenzu Bildhöhenverhältnis des darzustellenden Fernsehsignals abhängigen Richtung drehbar ist.

2. Lichtventil-Projektor nach Anspruch 1, **dadurch gekennzeichnet,** daß der Anamorphot (AW) mit einem drehbaren Gehäusering (GH) fest verbunden ist.

3. Lichtventil-Projektor nach Anspruch 1, **dadurch gekennzeichnet,** daß er eine Schaltung (KS) zur Auswertung eines mit dem Fernsehsignal übertragenen Kennsignals für das Bildbreiten- zu Bildhöhenverhältnis aufweist und die Drehung des Anamorphots (AW) in Ansprache auf das Kennsignal mittels eines Motors (M) erfolgt.

4. Lichtventil-Projektor nach Anspruch 1, **dadurch gekennzeichnet,** daß die Drehung des Anamorphots (AW) in Ansprache auf einen mittels einer Bedieneinheit (FG, FE) eingegebenen Bedienbefehl mittels eines Motors (M) erfolgt.

5. Lichtventil-Projektor nach einem oder mehreren der vorhergehenden Ansprüche, **dadurch gekennzeichnet**, daß jedes Lichtventil (F1, F2, F3) ein Flüssigkristall-Lichtventil ist.

6. Lichtventil-Projektor nach einem oder mehreren der vorhergehenden Ansprüche, **dadurch gekennzeichnet**, daß jedes Lichtventil (F1, F2, F3) zur alternativen Wiedergabe von Fernsehsignalen mit einem Bildbreiten- zu Bildhöhenverhältnis von 16:9 oder 4:3 ein Bildbreiten- zu Bildhöhenverhältnis (BS) von

$$[ \, (16:9) \cdot (4:3) \, ] \cdot \exp 0.5$$

aufweist und der Anamorphot (AW) bei der Wiedergabe eines Fernsehsignals mit einem Bildbreiten- zu Bildhöhenverhältnis von 4:3 das wiederzugebende Bild in Vertikalrichtung um einen Faktor

$$FK1 = BS : (4:3)$$

und bei der Wiedergabe eines Fernsehsignals mit einem Bildbreiten- zu Bildhöhenverhältnis von 16:9 das wiederzugebende Bild in Horizontalrichtung um einen Faktor

$$FK2 = (16:9) : BS = FK1$$

dehnt.

## Claims

1. A light valve projector for reproducing television signals and consisting of:
   - lighting optics;
   - at least one light valve;
   - projection optics; and
   - an anamorphic lens;
   
   characterized in that in order to reproduce alternately television signals of two different image width to image height ratios:
   - the image width to image height ratio of each light valve (F1, F2, F3) corresponds to the geometric mean of the two different image width to image height ratios; and
   - the anamorphic lens (AW) can be rotated into one of two positions about the central axis (M) in order to expand the image in a direction dependent on the image width to image height ratio of the television signal to be displayed.

2. A light valve projector according to Claim 1, characterized in that the anamorphic lens (AW) is rigidly connected to a rotatable housing ring (GH).

3. A light valve projector according to Claim 1, characterized in that it comprises a circuit (KS) for evaluating a characteristic signal transmitted with the television signal for the image width to image height ratio and the anamorphic lens (AW) is rotated by a motor (M) in response to the characteristic signal.

4. A light valve projector according to Claim 1, characterized in that the anamorphic lens (AW) is rotated by a motor (M) in response to an operating command input by means of an operating unit (FG, FE).

5. A light valve projector according to one or more of the preceding claims, characterized in that each light valve (F1, F2, F3) is a liquid crystal light valve.

6. A light valve projector according to one or more of the preceding claims, characterized in that each light valve (F1, F2, F3) has an image width to image height ratio (BS) of

$$[ \, (16:9) \cdot (4:3) \, ] \cdot \exp 0.5$$

for alternately reproducing television signals with an image width to image height ratio of 16:9 or 4:3, and the anamorphic lens (AW) expands the image to be reproduced in the vertical direction by a factor of

$$FK1 = BS : (4:3)$$

when a television signal having an image width to image height ratio of 4:3 is reproduced and expands the image to be reproduced in the horizontal direction by a factor of

$$FK2 = (16:9) : BS = FK1$$

when a television signal having an image width to image height ratio of 16:9 is reproduced.

## Revendications

1. Projecteur à valves optiques pour la reproduction de signaux de télévision, constitué par
   - un système optique d'éclairement,

- au moins une valve optique,
- un système optique de projection, et
- un élément anamorphotique,

caractérisé en ce que pour la reproduction alternée de signaux de télévision possédant deux rapports largeur/hauteur d'image différents,

- le rapport largeur/hauteur d'image dans chaque valve optique (F1, F2, F3) correspond à la moyenne géométrique des deux rapports largeur/hauteur d'image différents, et
- on peut faire tourner le dispositif anamorphotique (AW) pour l'amener dans l'une de deux positions, autour de l'axe médian (M) pour élargir l'image dans une direction qui dépend du rapport largeur/hauteur d'image du signal de télévision devant être représenté.

2. Projecteur à valves optiques selon la revendication 1, caractérisé en ce que le dispositif anamorphotique (AW) est relié de façon fixe à une bague rotative (GH) du boîtier.

3. Projecteur à valves optiques selon la revendication 1, caractérisé en ce qu'il possède un circuit (KS) servant à évaluer un signal caractéristique, qui est transmis avec le signal de télévision, pour le rapport largeur/hauteur d'image et que la rotation du dispositif anamorphotique (AW) est exécutée en réponse au signal caractéristique, à l'aide d'un moteur (M).

4. Projecteur à valves optiques selon la revendication 1, caractérisé en ce que la rotation du dispositif anamorphotique (AW) s'effectue en réponse à une instruction de commande introduite au moyen d'une unité de commande (FG, FE), à l'aide d'un moteur (M).

5. Projecteur à valves optiques selon une ou plusieurs des revendications précédentes, caractérisé en ce que chaque valve optique (F1, F2, F3) est une valve optique à cristal liquide.

6. Projecteur à valves optiques selon une ou plusieurs des revendications précédentes, caractérisé en ce que chaque valve optique (F1, F2, F3) possède, pour la reproduction alternée de signaux de télévision avec un rapport largeur/hauteur d'image égal à 16:9 ou 4:3, un rapport (BS) largeur/hauteur d'image égal à

$$[(16:9) \cdot (4:3)] \cdot \exp 0{,}5$$

et que lors de la reproduction d'un signal de télévision avec un rapport largeur/hauteur d'image égal à 4:3, le dispositif anamorphotique (AW) dilate l'image devant être reproduite, d'un facteur

$$FK1 = BS : (4:3)$$

dans la direction verticale et, lors de la reproduction d'un signal de télévision présentant un rapport largeur/hauteur d'image égal à 16:9, dilate l'image devant être reproduite d'un facteur

$$FK2 = (16:9) : BS = FK1$$

dans la direction horizontale.